# FASCICULE DE BREVET EUROPEEN

(11) **EP 3 095 646 B1**
(45) Date de publication et mention de la délivrance du brevet: **30.08.2017**
(21) Numéro de dépôt: 16168373.5
(22) Date de dépôt: 04.05.2016
(51) Int. Cl.: B60R 13/02, B60R 13/00, G09F 3/00, C09J 7/04, G09F 21/04

(54) **ÉLÉMENT DE DÉCORATION AGENCÉ POUR ÊTRE INSTALLÉ SUR UN ÉLÉMENT D´HABITACLE DE VÉHICULE**
DEKORATIONSELEMENT, DAS ZUM EINBAU IN EIN FAHRZEUGINNENRAUMELEMENT ANGEORDNET IST
DECORATIVE ELEMENT ARRANGED TO BE INSTALLED ON AN ELEMENT OF A VEHICLE PASSENGER COMPARTMENT

(30) Priorité: 21.05.2015 FR 1554568
(43) Date de publication de la demande: 23.11.2016
(73) Titulaire: PSA Automobiles SA, 78300 Poissy (FR)
(72) Inventeur: MORAUX, SEBASTIEN, 78280 GUYANCOURT (FR); FRANOUX, ELISABETH, 78140 VELIZY VILLACOUBLAY (FR)

(56) Documents cités:
- WO-A1-2012/128606
- FR-A1- 2 933 421
- US-A- 5 532 045

## Description

La présente invention concerne de manière générale un élément de décoration pouvant être fixé dans un habitacle de véhicule automobile, tel qu'une garniture de siège ou tableau de bord.

Il est connu dans l'art antérieur des pièces de décoration agencées à l'intérieur d'un habitacle de véhicule. En effet, de nos jours, sur certains véhicules haut de gamme, les constructeurs proposent, généralement en option, différents types d'habillage d'intérieur de plus en plus luxueux. Si à l'époque, le revêtement en cuir des sièges ou d'autres éléments d'habitacle tels que le volant ou l'accoudoir central était par exemple un luxe, il est de plus en plus répandu et d'autres matériaux tels que du bois précieux, des baguettes en aluminium ou du même genre, ont été proposés pour habiller les éléments d'habitacle de véhicule. Ces éléments décoratifs étant relativement rigides, ils peuvent être facilement fixés dans l'habitacle via vissage ou collage, par exemple. En revanche, des éléments décoratifs qui seraient souples, relativement au bois précieux, par exemple, ont plus de mal à être fixés dans un habitacle. Dans la mesure où, de nos jours, des éléments décoratifs souples sont maintenant utilisés comme matériaux décoratifs, il a été nécessaire de trouver comment fixer ces éléments décoratifs dans l'habitacle du véhicule.

Par exemple, le document FR 2 933 421 décrit un support autocollant pour strass dans lequel une couche dans laquelle sont incrustés des cristaux présente une face adhésive pour être collée à un élément quelconque. Cependant, avec ce type de produit, il est possible d'avoir des zones de couche dans laquelle le strass est irrégulier ou absent et il n'est proposé de produit dans lequel la pièce de décor présente une zone de cristal uniforme. Egalement, les bords de la pièce collée peuvent être facilement endommagés et donc arrachés car ils ne sont pas protégés.

Un but de la présente invention est de répondre aux inconvénients de l'art antérieur mentionnés ci-dessus et en particulier, tout d'abord, de proposer une pièce de décoration que l'on peut facilement et solidement installer dans un habitacle de véhicule et qui est protégée des agressions extérieures.

Pour cela un premier aspect de l'invention concerne un élément de décoration agencé pour être installé sur un élément d'habitacle de véhicule, comprenant un support et un film comprenant du strass collé sur le support et caractérisé en ce qu'il comprend en outre un élément de revêtement appliqué au support et rabattu sur le support de manière à recouvrir au moins partiellement le film comprenant du strass. De cette manière, les bords du film sont au moins partiellement protégés des agressions extérieures.

Une réalisation particulièrement intéressante consiste en ce que le support comprend une surface principale et une surface secondaire et en ce que l'élément de revêtement est appliqué sur une surface secondaire du support opposée à la surface principale du support et est au moins partiellement rabattu sur la surface principale de manière à recouvrir au moins partiellement le film comprenant du strass. De cette manière, l'élément de revêtement lui-même est protégé contre le décollage.

De manière avantageuse, l'élément de revêtement est collé aux surfaces principale et secondaire du support. Ainsi, on obtient un élément indépendant.

De manière avantageuse, le film comprenant du strass est collé sur une portion de la surface principale du support de sorte que la surface principale du support présente une portion non revêtue située entre le film comprenant du strass et des bords du support. De cette manière, le film comprenant du strass est protégé vis-à-vis des agressions contre les bords du support.

Avantageusement, l'élément de revêtement est rabattu sur la surface principale de manière à totalement recouvrir la portion non revêtue par le film comprenant du strass du support. Ainsi, l'élément de décor présente un motif de strass uniforme.

Une réalisation particulièrement intéressante consiste en ce qu'une portion rabattue de l'élément de revêtement a une largeur supérieure à la largeur de la portion non revêtue par le film comprenant du strass du support. De cette manière, il est plus facile de recouvrir les bords du film comprenant du strass.

De manière avantageuse, le film comprenant du strass est collé au support par thermocollage. Ainsi, le film est solidement fixé au support.

Avantageusement, l'élément de revêtement est du cuir ou du TEP, De cette manière, il peut être utilisé comme objet de décoration dans un véhicule.

Une réalisation particulièrement intéressante consiste en ce que le support est un support textile. Ainsi, l'élément de décoration peut s'adapter à différents types et formes de substrats sur lesquels il est agencé pour être fixé.

Un second aspect de l'invention est un véhicule automobile comportant au moins un élément de décoration selon le premier aspect de l'invention.

D'autres caractéristiques et avantages de la présente invention apparaîtront plus clairement à la lecture de la description détaillée qui suit d'un mode de réalisation de l'invention donné à titre d'exemples nullement limitatif et illustré par les dessins annexés, dans lesquels :
- La figure 1 représente un support sur lequel est collé un film comprenant du strass de l'ensemble de décoration selon l'invention.
- La figure 2 représente une vue en coupe d'un mode de réalisation de l'élément de décoration selon l'invention avant rabattement de l'élément de revêtement.
- La figure 3 représente une vue de face du mode de réalisation de l'élément de décoration selon l'invention après rabattement de l'élément de revêtement.

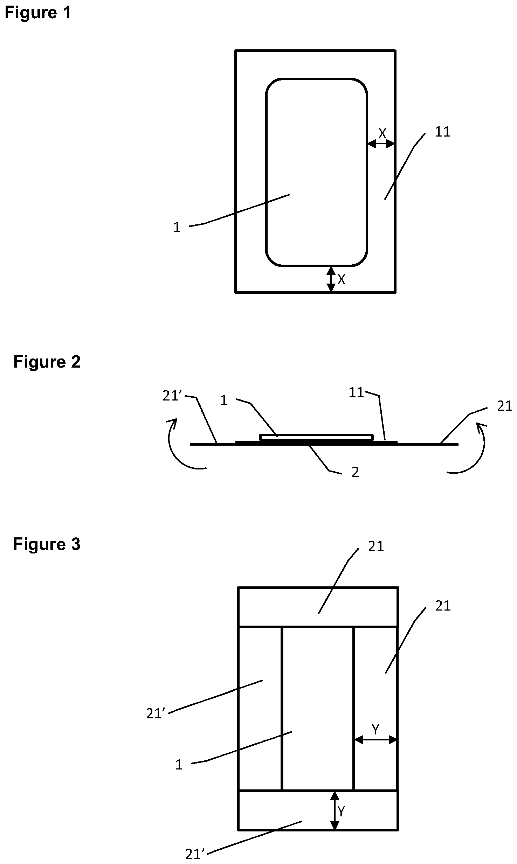

La figure 1 représente un support 11, de préférence un support textile, sur lequel est collé un film comprenant du strass 1. Par « film comprenant du strass 1 », on entend un film sur ou dans lequel est présent et visible du strass. Par « strass », on entend tout élément qui brille d'un éclat trompeur, tel que des éléments du type pierres précieuses ou semi précieuses ou des cristaux, par exemple.

La figure 2 représente une vue en coupe d'un mode de réalisation de l'élément de décoration selon l'invention avant rabattement de l'élément de revêtement, dans lequel l'élément de décoration est agencé pour être installé sur un élément d'habitacle de véhicule, et comprend un support 11 et un film comprenant du strass 1 collé sur une surface principale du support 11 et caractérisé en ce qu'il comprend en outre un élément de revêtement 2, de préférence du cuir ou du TEP (tissu enduit de plastique), appliqué au support 11 et rabattu sur le support 11 de manière à recouvrir au moins partiellement le film comprenant du strass 1. De préférence, l'élément de revêtement 2 est appliqué sur une surface secondaire du support 11, la surface vers le bas dans la figure 2, opposée à la surface principale du support, la surface vers le haut dans la figure 2, et est au moins partiellement rabattu sur la surface principale comme l'indique les flèches sur la figure 2, de manière à recouvrir au moins partiellement le film comprenant du strass 1.

A noter que de préférence, une fois que les portions 21 et 21' ont été rabattues, l'élément de revêtement 2 est collé aux surfaces principale et secondaires du support 11.

De préférence, le film comprenant du strass 1 est collé sur une portion de la surface principale du support 11 de sorte que la surface principale du support 11 présente une portion non revêtue située entre le film comprenant du strass 1 et des bords du support 11. Ensuite, l'élément de revêtement 2 est rabattu sur la surface principale du support 11 de manière à totalement recouvrir la portion non revêtue par le film comprenant du strass 1 du support 11.

Pour cela, une portion rabattue 21, 21' de l'élément de revêtement 2 a une largeur supérieure à la largeur de la portion non revêtue par le film comprenant du strass 1 du support 11. Par exemple, si la portion non revêtue du support a une largeur de 10 millimètres, la portion rabattue 21, 21' aura de préférence une largeur supérieure, telle que 11 ou 12 millimètres. A noter que par « largeur de la portion non revêtue », on entend la distance la plus courte entre un bord du support 11 et un bord du film 1 tel que représenté par X sur la figure 1. De la même manière, par « largeur de la portion rabattue », on entend la distance la plus courte entre le bord de cette potion 21, 21' et le bord du support 11 tel que représenté par Y dans la figure 3.

Afin de bien coller le film sur le support 11, on peut utiliser plusieurs types de procédé de collage, l'un des préférés étant un procédé de thermocollage.

La figure 3 représente une vue de face de l'élément de décoration de l'invention. Comme on le voit, les portions rabattue 21, 21' entourent et délimitent une fenêtre dans laquelle apparait le film 1. A noter que la figure 3 présente des portions rabattues de forme spécifiques qui ne sont absolument pas limitatives et peuvent être différentes

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Elément de décoration agencé pour être installé sur un élément d'habitacle de véhicule, comprenant un support (11) et un film comprenant du strass (1) collé sur le support et **caractérisé en ce qu'**il comprend en outre un élément de revêtement (2) appliqué au support et rabattu sur le support de manière à recouvrir au moins partiellement le film comprenant du strass.

2. Elément de décoration selon la revendication 1, **caractérisé en ce que** le support (11) comprend une surface principale et une surface secondaire et **en ce que** l'élément de revêtement (2) est appliqué sur une surface secondaire du support opposée à la surface principale du support et est au moins partiellement rabattu sur la surface principale de manière à recouvrir au moins partiellement le film comprenant du strass (1).

3. Elément de décoration selon la revendication 2, **caractérisé en ce que** l'élément de revêtement (2) est collé aux surfaces principale et secondaire du support (11).

4. Elément de décoration selon l'une quelconque des revendications 2 ou 3, **caractérisé en ce que** le film comprenant du strass (1) est collé sur une portion de la surface principale du support (11) de sorte que la surface principale du support présente une portion non revêtue située entre le film comprenant du strass et des bords du support.

5. Elément de décoration selon la revendication 4, **caractérisé en ce que** l'élément de revêtement (2) est rabattu sur la surface principale de manière à totalement recouvrir la portion non revêtue par le film comprenant du strass (1) du support (11).

6. Elément de décoration selon l'une quelconque des revendications 4 ou 5, **caractérisé en ce qu'**une portion rabattue (21, 21') de l'élément de revêtement (2) a une largeur supérieure à la largeur de la portion non revêtue par le film comprenant du strass (1) du support (11).

7. Elément de décoration selon l'une quelconque des revendications 1 à 6, **caractérisé en ce que** le film comprenant du strass (1) est collé au support (11) par thermocollage.

8. Elément de décoration selon l'une quelconque des revendications 1 à 7, **caractérisé en ce que** l'élément de revêtement (2) est du cuir ou du TEP.

9. Elément de décoration selon l'une quelconque des revendications 1 à 8, **caractérisé en ce que** le support (11) est un support textile.

10. Véhicule automobile comportant au moins un élément de décoration selon l'une des revendications 1 à 9.

## Patentansprüche

1. Dekorationselement, das angeordnet ist, um auf einem Fahrzeuginnenraumelement installiert zu werden, das einen Träger (11) und eine Folie umfasst, die Strass (1) umfasst, die auf den Träger geklebt ist, und **dadurch gekennzeichnet, dass** es außerdem ein Beschichtungselement (2) umfasst, das auf den Träger aufgebracht und auf dem Träger derart umgeschlagen ist, dass es die Folie, die Strass umfasst, mindestens teilweise abdeckt.

2. Dekorationselement nach Anspruch 1, **dadurch gekennzeichnet, dass** der Träger (11) eine Hauptfläche und eine Nebenfläche umfasst, und dass das Beschichtungselement (2) auf eine Nebenfläche des Trägers, der Hauptfläche des Trägers entgegengesetzt, aufgebracht und mindestens teilweise auf der Hauptfläche derart umgeschlagen ist, dass die Folie, die Strass (1) umfasst, mindestens teilweise abgedeckt ist.

3. Dekorationselement nach Anspruch 2, **dadurch gekennzeichnet, dass** das Beschichtungselement (2) auf die Hauptfläche und Nebenfläche des Trägers (11) geklebt ist.

4. Dekorationselement nach einem der Ansprüche 2 oder 3, **dadurch gekennzeichnet, dass** die Folie, die Strass (1) umfasst, auf einen Abschnitt der Hauptfläche des Trägers (11) derart geklebt ist, dass die Hauptfläche des Trägers einen unbeschichteten Abschnitt aufweist, der zwischen der Folie, die Strass umfasst, und Rändern des Trägers liegt.

5. Dekorationselement nach Anspruch 4, **dadurch gekennzeichnet, dass** das Beschichtungselement (2) auf der Hauptfläche derart umgeschlagen ist, dass es den von der Folie des Trägers (11), die Strass (1) umfasst, nicht beschichteten Abschnitt vollständig abdeckt.

6. Dekorationselement nach einem der Ansprüche 4 oder 5, **dadurch gekennzeichnet, dass** ein umgeschlagener Abschnitt (21, 21') des Beschichtungselements (2) eine Breite hat, die größer ist als die Breite des nicht von der Folie des Trägers (11), die Strass (1) umfasst, beschichteten Abschnitts.

7. Dekorationselement nach einem der Ansprüche 1 bis 6, **dadurch gekennzeichnet, dass** die Folie, die Strass (1) umfasst, auf den Träger (11) durch Heißkleben geklebt ist.

8. Dekorationselement nach einem der Ansprüche 1 bis 7, **dadurch gekennzeichnet, dass** das Beschichtungselement (2) Leder oder TEP ist.

9. Dekorationselement nach einem der Ansprüche 1 bis 8, **dadurch gekennzeichnet, dass** der Träger (11) ein Textilträger ist.

10. Kraftfahrzeug, das mindestens ein Dekorationselement nach einem der Ansprüche 1 bis 9 umfasst.

## Claims

1. A decorative element arranged to be installed on an element of a vehicle passenger compartment, including a support (11) and a film including strass (1) bonded on the support and **characterized in that** it further includes a coating element (2) applied to the support and turned down on the support so as to at least partially cover the film including strass.

2. The decorative element according to claim 1, **characterized in that** the support (11) includes a main surface and a secondary surface and **in that** the coating element (2) is applied on a secondary surface of the support opposite the main surface of the support and is at least partially turned down on the main surface so as to at least partially cover the film including strass (1).

3. The decorative element according to claim 2, **characterized in that** the coating element (2) is bonded to the main and secondary surfaces of the support (11).

4. The decorative element according to any one of claims 2 or 3, **characterized in that** the film including strass (1) is bonded on a portion of the main surface of the support (11) such that the main surface of the support presents a non-coated portion, situated between the film including strass and edges of the support.

5. The decorative element according to claim 4, **characterized in that** the coating element (2) is turned down on the main surface so as to totally cover the portion not coated by the film including strass (1) of the support (11).

6. The decorative element according to any one of claims 4 or 5, **characterized in that** a turned down portion (21, 21') of the coating element (2) has a greater width than the width of the portion not coated by the film including strass (1) of the support (11).

7. The decorative element according to any one of claims 1 to 6, **characterized in that** the film including strass (1) is bonded to the support (11) by thermal bonding.

8. The decorative element according to any one of claims 1 to 7, **characterized in that** the coating element (2) is leather or plastic-coated textile.

9. The decorative element according to any one of claims 1 to 8, **characterized in that** the support (11) is a textile support.

10. A motor vehicle comprising at least one decorative element according to one of claims 1 to 9.
